# FASCICULE DE BREVET EUROPEEN

(11) **EP 0 920 158 B1**
(45) Date de publication et mention de la délivrance du brevet: **02.07.2003**
(21) Numéro de dépôt: 98402915.7
(22) Date de dépôt: 24.11.1998
(51) Int. Cl.: H04L 12/58

(54) **Procédé de renvoi d'un courrier électronique d'une boîte à lettres de destination sur une boîte à lettres de détournement et terminal pour la mise en oeuvre du procédé**
Verfahren zur Weiterleitung von elektronischer Post von einem Zielbriefkasten zu einem Umleitungsbriefkasten und Endgerät zur Realisierung des Verfahrens
Method of forwarding e-mail from a destination mailbox to a diverted mailbox and terminal for realising the method

(30) Priorité: 28.11.1997 FR 9715006
(43) Date de publication de la demande: 02.06.1999
(73) Titulaire: SAGEM SA, 75116 Paris (FR)
(72) Inventeur: Cazin, Dominique, 92150 Suresnes (FR); Castet, Jean-Philippe, 75018 Paris (FR); Gavoille, Laurent, 78700 Conflans Sainte Honorine (FR)
(74) Mandataire: Bloch, Gérard

(56) Documents cités:
- EP-A- 0 413 537
- PALME J ET AL: "Issues when designing filters in messaging systems" COMPUTER COMMUNICATIONS, vol. 19, no. 2, février 1996, page 95-101 XP004032392

## Description

Le courrier électronique est un moyen de communication permettant à un terminal expéditeur d'envoyer un message auquel est éventuellement rattaché un fichier de données (de type image, son, EXCEL, etc...) vers au moins un terminal destinataire, à travers un réseau informatique tel que l'Internet.

Par terminal, on entend désigner un ordinateur individuel, un télécopieur et autre machine de bureau agencée pour pouvoir se connecter à l'Internet, pour reprendre cet exemple.

Généralement, le courrier n'est pas reçu directement par le terminal destinataire, mais est envoyé sur un serveur de courriers qui se charge de le stocker dans une boîte à lettres attribuée au terminal destinataire. Pour consulter le courrier, le terminal destinataire doit se connecter au serveur de courriers puis télécharger le courrier contenu dans sa boîte à lettres.

Un tel procédé est décrit dans le document de Palme J. " Issues when designing filters in messaging systems", publié dans Computer Communcations, vol. 19, no. 2, pages 95-101, en février 1996.

La connexion au serveur de courriers consiste généralement à établir une communication téléphonique locale, donc bon marché, avec le serveur de courriers.

Un utilisateur du terminal destinataire, en déplacement, éloigné de son serveur de courriers, peut souhaiter consulter le contenu de sa boîte à lettres. Bien sûr, il peut se connecter à son serveur de courriers à l'aide d'un terminal distant. Mais dans ce cas, le coût de la communication téléphonique entre le serveur de courriers et le terminal distant serait le coût d'une communication à longue distance, donc très chère.

L'invention propose d'abord de pallier cet inconvénient.

A cet effet, l'invention concerne un procédé de renvoi d'un courrier électronique d'une boîte à lettres de destination, attribuée à un terminal par un serveur de courriers électroniques, sur une boîte à lettres de détournement, procédé au cours duquel le terminal se connecte au serveur de courriers, télécharge le courrier contenu dans la boîte à lettres de destination et le renvoie automatiquement sur la boîte à lettres de détournement, au cours de la même communication avec le serveur de courriers.

Grâce à l'invention, on peut commander le renvoi du courrier sur une boîte à lettres de détournement gérée par un serveur de courriers proche du lieu de déplacement de l'utilisateur du terminal destinataire.

Avantageusement, le courrier contenu dans la boîte à lettres de destination contenant une adresse de destination qui est celle de la boîte à lettres de destination, on remplace ladite adresse par l'adresse de la boîte à lettres de détournement avant de renvoyer le courrier.

Dans un mode de réalisation particulier, le terminal détermine si le contenu dudit courrier est illisible et, le cas échéant, commande son renvoi sur la boîte à lettres de détournement.

Grâce à l'invention, on peut renvoyer des courriers, auxquels sont rattachés des fichiers de données que le terminal destinataire n'est pas capable de lire d'exploiter, et donc de restituer, vers la boîte à lettres d'un autre terminal qui en est capable.

L'invention concerne encore un terminal pour la mise en oeuvre du procédé ci-dessus, disposant d'une boîte à lettres, avec une adresse auprès d'un serveur de courriers électroniques d'un réseau informatique tel que l'Internet , comprenant des moyens de connexion au serveur de courriers , des moyens pour télécharger au moins un courrier contenu dans la boîte à lettres et des moyens d'émission agencés pour envoyer au moins un courrier électronique vers une adresse sur le réseau informatique, caractérisé par le fait qu'il comprend en outre des moyens d'aiguillage agencés pour aiguiller un courrier téléchargé vers les moyens d'émission, et les moyens de réception et les moyens d'émission sont respectivement agencés pour télécharger ledit courrier et pour le renvoyer sur une boîte à lettres de détournement, au cours d'une même communication avec le serveur de courriers.

L'invention sera mieux comprise à l'aide de la description suivante d'un mode de réalisation particulier du procédé de renvoi de l'invention et d'une forme de réalisation particulière du terminal de l'invention en référence au dessin annexé, sur lequel :
- la figure 1 représente une vue schématique du procédé de renvoi et
- la figure 2 représente un schéma bloc fonctionnel du terminal.

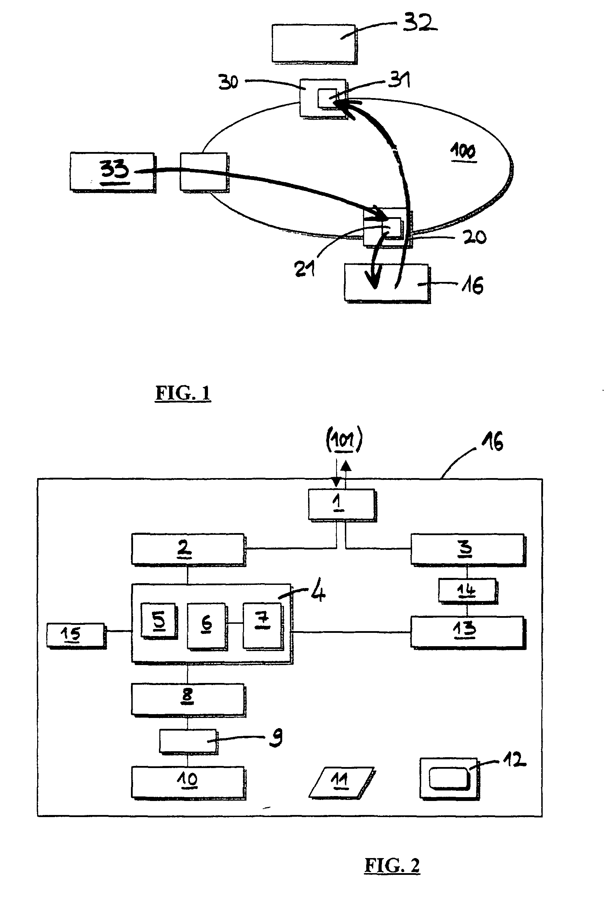

Le terminal 16 représenté sur la figure 2 est agencé pour se connecter, ici par connexion téléphonique, à un fournisseur d'accès à un réseau informatique, ici l'Internet 100, comportant un serveur de courriers électroniques 20 auprès duquel il dispose d'une boîte à lettres 21, avec une adresse électronique sur l'Internet 100.

Le terminal 16 comprend un automate 2 de réception de courrier électronique, un automate 3 d'émission de courrier, un automate 10 d'impression de courrier, une mémoire de courriers 15 et une interface utilisateur comportant un clavier de saisie 11 et un écran de visualisation 12.

Les automates de réception 2 et d'émission 3 sont reliés un automate 1 de connexion téléphonique au serveur de courriers 20, relié à un réseau téléphonique, ici le réseau téléphonique commuté (RTC) 101, et agencé pour exécuter un protocole de connexion téléphonique au serveur de courriers 20. L'automate de réception 2 est destiné, au cours d'une communication téléphonique avec le serveur de courriers 20, à télécharger un ou plusieurs courriers contenus de la boîte à lettres 21. L'automate d'émission 3 est destiné, au cours d'une communication téléphonique avec le serveur de courriers 20, à envoyer un ou plusieurs courriers vers une adresse électronique sur l'Internet 100.

L'automate d'impression 10 est relié à un automate de préparation d'impression 8 avec interposition d'une mémoire d'impression 9 destinée à contenir des courriers en attente d'impression.

L'automate d'émission 3 est relié à un automate de préparation d'émission 13 avec interposition d'une mémoire d'émission 14 destinée à contenir des courriers en attente d'émission. L'automate de préparation d'émission 13 comporte un logiciel pour préparer des courriers électroniques à émettre.

Le terminal 16 comprend en outre un automate d'aiguillage 4 relié l'automate de réception 2, à la mémoire de courriers 15, à l'automate de préparation d'émission 13 et à l'automate de préparation d'impression 8. L'automate d'aiguillage 4 est destiné à aiguiller les courriers téléchargés par l'automate de réception 2 vers la mémoire de courriers 15, vers l'automate de préparation d'impression 8 ou vers l'automate de préparation d'émission 13.

L'automate d'aiguillage 4 comporte un programme pour gérer une interface de configuration destinée à s'afficher sur l'écran 12 et à permettre à un utilisateur de configurer l'automate d'aiguillage 4, à l'aide du clavier de saisie 11. La configuration de l'automate d'aiguillage 4 consiste à définir son mode de fonctionnement en sélectionnant une ou plusieurs des commandes suivantes:
- stockage des courriers;
- impression des courriers;
- renvoi systématique des courriers sur une boîte à lettres de détournement et
- renvoi des courriers illisibles sur une boîte à lettres de détournement.

Les commandes de stockage et d'impression commandent respectivement le stockage et l'impression des courriers téléchargés par l'automate de réception 2.

La commande de renvoi systématique commande le renvoi sur la boîte à lettres de détournement de tous les courriers téléchargés, et la commande de renvoi des courriers illisibles commande le renvoi des courriers téléchargés dont le contenu est illisible pour le terminal. Un contenu illisible correspond à un contenu que le terminal ne peut pas exploiter, et donc éditer, restituer par impression ou par affichage sur l'écran 12.

L'interface de configuration permet également de saisir l'adresse électronique sur l'Internet 100 de la boîte à lettres de détournement 31, à l'aide du clavier de saisie 11, et de la préenregistrer dans une mémoire 5 de l'automate d'aiguillage 4.

L'automate d'aiguillage 4 comprend en outre un décodeur 6 destiné à décoder des fichiers de données contenus dans les courriers reçus, et un lecteur 7 destiné à examiner les fichiers de données afin de déterminer s'ils peuvent être lus par le terminal.

Enfin, tous les éléments du terminal 16 sont reliés à une unité de contrôle, non représentée, destinée à commander le fonctionnement du terminal.

Le fonctionnement du terminal 16 configuré en mode de renvoi systématique, correspondant à un mode de réalisation du procédé de renvoi de l'invention, va d'abord être décrit.

A l'aide de l'interface de configuration de l'automate d'aiguillage 4, du clavier de saisie 11 et de l'écran de visualisation 12, on configure au préalable l'automate d'aiguillage 4 en mode de renvoi systématique sur une boîte à lettres de détournement 31, ici attribuée à un terminal 32 par un serveur de courriers 30, et on préenregistre l'adresse électronique sur l'Internet 100 de la boîte à lettres de détournement 31 dans la mémoire 5 de l'automate d'aiguillage 4.

Dans l'exemple particulier de la description, un courrier électronique est envoyé depuis un terminal 33, à travers l'Internet 100, sur la boîte à lettres 21 dans laquelle il est stocké, la boîte à lettres 21 constituant par conséquent une boîte à lettres de destination du courrier. Le courrier contient un en-tête auquel est rattaché un fichier de données. L'en-tête comporte un champ "destination" contenant l'adresse de destination du courrier sur l'Internet 100, soit l'adresse électronique de la boîte à lettres 21.

Afin de renvoyer le courrier de la boîte à lettres de destination 21 sur la boîte à lettres de détournement 31, l'automate de connexion 2 du terminal 16 exécute le protocole de connexion téléphonique au serveur de courriers 20. La communication téléphonique étant établie entre le serveur de courriers 20 et le terminal, l'automate de réception 2 télécharge le courrier et le fournit à l'automate d'aiguillage 4.

L'automate d'aiguillage 4 aiguille automatiquement le courrier vers l'automate de préparation d'émission 13, en fournissant à celui-ci l'adresse électronique de la boîte à lettres de détournement 31 préenregistrée dans la mémoire 5.

L'automate de préparation d'émission 13 procède à un changement de l'adresse de destination du courrier en remplaçant l'adresse contenue dans le champ "destination", par l'adresse de la boîte à lettres de détournement 31, puis place le courrier en attente d'émission dans la mémoire d'émission 14.

A la fin du téléchargement du contenu de la boîte à lettres 21, sous la commande de l'unité de contrôle, l'automate d'émission 3 transmet le courrier en attente d'émission dans la mémoire d'émission 14 vers le serveur de courriers 20 puis l'automate de connexion 1 se déconnecte du serveur de courriers 20. Le courrier est acheminé sur l'Internet 100 vers l'adresse contenue dans le champ "destination", donc vers la boîte à lettres de détournement 31.

Le courrier est ainsi téléchargé depuis la boîte à lettres de destination 21 puis automatiquement renvoyé sur la boîte à lettres de détournement 31, au cours d'une même communication téléphonique avec le serveur de courriers 20.

Dans le cas où l'automate d'aiguillage 4 est configuré en mode de renvoi des courriers illisibles, le courrier est téléchargé par l'automate de réception 2, le décodeur 6 décode le fichier de données du courrier, le lecteur 7 l'examine et détermine si le terminal peut l'exploiter, le restituer.

Si le fichier de données du courrier est illisible, l'automate d'aiguillage 4 fournit le courrier et l'adresse de la boîte à lettres de détournement 31 à l'automate de préparation d'émission 13 qui procède à un changement de l'adresse de destination du courrier et, à la fin du téléchargement, le courrier est transmis vers la boîte à lettres de détournement 31, comme décrit précédemment. La boîte à lettres de détournement 31 est dans ce cas celle d'un terminal 32 capable de lire le courrier.

Si le contenu du courrier est lisible, l'automate d'aiguillage 4 l'aiguille vers la mémoire de courriers 7 pour stockage, ou vers l'automate de préparation d'impression 8 pour impression, selon la configuration de l'automate d'aiguillage 4.

Dans l'hypothèse où la boîte à courriers de destination 21 comprend une pluralité de courriers, l'automate de réception 2 se connecte au serveur de courriers, puis, successivement, télécharge la pluralité de courriers et les fournit à l'automate d'aiguillage 4.

En mode de renvoi systématique, l'automate d'aiguillage 4 aiguille automatiquement la pluralité de courriers vers l'automate de préparation d'émission 13 et, à la fin du téléchargement de la pluralité de courriers, ceux-ci sont transmis vers la boîte à lettres de détournement 31, comme précédemment explicité.

En mode de renvoi des courriers illisibles, l'automate d'aiguillage 4 décode les fichiers de données des courriers téléchargés et aiguille ceux qui sont illisibles vers l'automate de préparation d'émission 13 et, à la fin du téléchargement de la pluralité de courriers, seuls les courriers illisibles sont transmis vers la boîte au lettres de détournement 31.

Dans la description qui vient d'être faite, le terminal destinataire 16 est agencé pour se connecter à l'Internet 100, par connexion téléphonique à travers le réseau RTC 101. On pourrait envisager d'autres façons de se connecter à l'Internet 100, comme par exemple par connexion téléphonique à travers le réseau RNIS (Réseau Numérique à Intégration de Services).

## Revendications

1. Procédé de renvoi, d'un courrier électronique d'une boîte à lettres de destination (21) d'un serveur de courriers électroniques (20) et attribuée à un terminal (16) par le serveur, sur une boîte à lettres de détournement (31), procédé au cours duquel le terminal (16) se connecte au serveur de courriers (20), télécharge le courrier contenu dans la boîte à lettres de destination (21) et le renvoie automatiquement sur la boîte à lettres de détournement (31), au cours de la même communication avec le serveur de courriers (20).

2. Procédé selon la revendication 1, dans lequel, le courrier contenu dans la boîte à lettres de destination (21) contenant une adresse de destination qui est celle de la boîte à lettres de destination (21), on remplace ladite adresse par l'adresse de la boîte à lettres de détournement (31) avant de renvoyer le courrier.

3. Procédé de renvoi selon l'une des revendications 1 et 2, dans lequel, le terminal (16) détermine si le contenu dudit courrier est illisible et, le cas échéant, commande son renvoi sur la boîte à lettres de détournement (31).

4. Procédé selon l'une des revendications 1 à 3, dans lequel, on place le courrier, téléchargé et à renvoyer, en attente d'émission (14) et, à la fin du téléchargement du contenu de la boîte à lettres de destination (21), on le transmet au serveur de courriers (20).

5. Terminal pour la mise en oeuvre du procédé de la revendication 1, disposant d'une boîte à lettres (21), avec une adresse auprès d'un serveur de courriers électroniques (20) d'un réseau informatique tel que l'Internet (100), comprenant des moyens (1) de connexion au serveur de courriers (20), des moyens de réception (2) pour télécharger au moins un courrier contenu dans la boîte à lettres (21) et des moyens d'émission (3) agencés pour envoyer au moins un courrier électronique vers une adresse sur le réseau informatique (100), **caractérisé par le fait qu'**il comprend en outre des moyens d'aiguillage (4) agencés pour aiguiller un courrier téléchargé vers les moyens d'émission (3), et les moyens de réception (2) et les moyens d'émission (3) sont respectivement agencés pour télécharger ledit courrier et pour le renvoyer sur une boîte à lettres de détournement (31), au cours d'une même communication avec le serveur de courriers (20).

6. Terminal selon la revendication 5, dans lequel les moyens d'aiguillage (4) comprennent des moyens pour déterminer si le contenu du courrier téléchargé est illisible afin, le cas échéant, de commander son renvoi sur la boîte à lettres de détournement (31).

## Patentansprüche

1. Verfahren zum Weiterleiten einer E-mail aus einer Bestimmungsmailbox (21) eines E-mail-Servers (20), die durch den Server einem Terminal (16) zugewiesen ist, in eine Umleitungsmailbox (31), wobei in dessen Verlauf das Terminal (16) mit dem Mailserver (20) in Verbindung tritt, die in der Bestimmungsmailbox (21) enthaltene Mail herunterlädt und sie automatisch während ein und derselben Verbindung mit dem Mailserver (20) in die Umleitungsmailbox (31) weiterleitet.

2. Verfahren nach Anspruch 1, bei dem die in der Bestimmungsmailbox (21) enthaltene Mail eine Bestimmungsadresse enthält, die diejenige der Bestimmungsmailbox (21) ist, und diese Adresse vor dem weiterleiten der Mail durch die Adresse der Umleitungsmailbox (31) ersetzt wird.

3. Verfahren nach einem der Ansprüche 1 und 2, bei dem das Terminal (16) entscheidet, ob der Inhalt der Mail unleserlich ist und gegebenenfalls deren Weiterleitung in die Umleitungsmailbox (31) steuert.

4. Verfahren nach einem der Ansprüche 1 bis 3, bei dem die heruntergeladene und weiterzuleitende Mail in eine Sendewarteschleife (14) gestellt wird, und am Ende des Herunterladens des Inhalts der Bestimmungsmailbox (21) dem Mailserver (20) übermittelt wird.

5. Terminal zum Durchführen des Verfahrens von Anspruch 1, das über eine Mailbox (21) mit einer Adresse bei einem E-mail-Server (20) eines Computernetzes wie dem Internet (100) verfügt, Anschlusseinrichtungen (1) zum Mailserver (20) umfasst, Empfangseinrichtungen (2) zum Herunterladen mindestens einer in der Mailbox (21) enthaltenen Mail, und Sendeeinrichtungen (3), die so eingerichtet sind, dass sie mindestens eine E-mail zu einer Adresse im Computernetz (100) schicken, **dadurch gekennzeichnet, dass** es darüber hinaus Routingeinrichtungen (4) umfasst, die so eingerichtet sind, dass sie eine heruntergeladene Mail zu den Sendeeinrichtungen (3) routen, und die Empfangseinrichtungen (2) und Sendeeinrichtungen (3) jeweils so eingerichtet sind, dass sie die Mail während ein und derselben Verbindung mit dem Mailserver (20) herunterladen und in eine Umleitungsmailbox (31) Weiterleiten.

6. Verfahren nach Anspruch 5, bei dem die Routingeinrichtungen (4) Einrichtungen umfassen, um zu bestimmen, ob der Inhalt der heruntergeladenen Mail unleserlich ist, um gegebenenfalls deren Weiterleitung in die Umleitungsmailbox (31) zu steuern.

## Claims

1. Method of sending away an electronic mail from a destination mailbox (21) of an electronic mail server (20), said mailbox being attributed to a terminal (16) by the server, to a diverted mailbox (31), a method in the course of which the terminal (16) connects to the mail server (20), downloads the mail contained in the destination mailbox (21) and sends it away automatically to the diverted mailbox (31), in the course of the same communication with the mail server (20).

2. Method according to claim 1, wherein, if the mail contained in the destination mailbox (21) contains a destination address which is that of the destination mailbox (21), said address is replaced by the address of the diverted mailbox (31) before the mail is sent away.

3. Method according to one of claims 1 and 2, wherein the terminal (16) determines whether the contents of said mail is unreadable and, if necessary, controls its sending away to the diverted mailbox (31).

4. Method according to one of claims 1 to 3, wherein the downloaded mail to be sent away is placed on hold (14) and once the downloading of the contents of the destination mailbox (21) is completed, the mail is forwarded to the mail server (20).

5. Terminal for implementing the method of claim 1, having a mailbox (21) with an address at an electronic mail server (20) of a computer network such as the Internet (100), comprising means (1) for connecting to the mail server (20), receiving means (2) to download at least one item of mail contained in the mailbox (21) and sending means (3) arranged to send at least one item of electronic mail to an address on the computer network (100), **characterised by** the fact that it comprises in addition switching means (4) arranged to direct downloaded mail to the sending means (3), and the receiving means (2) and the sending means (3) are respectively arranged to download said mail and to send it away to a diverted mailbox (31) in the course of the same communication with the mail server (20).

6. Terminal according to claim 5, wherein the switching means (4) include means for determining whether the content of the downloaded mail is unreadable, in order, if necessary, to control its sending away to the diverted mailbox (31).
